# EUROPÄISCHE PATENTSCHRIFT

(11) **EP 2 442 141 B1**
(45) Veröffentlichungstag und Bekanntmachung des Hinweises auf die Patenterteilung: **01.01.2014**
(21) Anmeldenummer: 11177080.6
(22) Anmeldetag: 10.08.2011
(51) Int. Cl.: G01V 8/22

(54) **Optoelektronischer Sensor mit Linienanordnung von Einzelemittern**
Optoelectronic sensor with linear configuration of individual emitters
Capteur optoélectronique doté d'un agencement de lignes d'émetteurs individuels

(30) Priorität: 14.10.2010 DE 102010038186
(43) Veröffentlichungstag der Anmeldung: 18.04.2012
(73) Patentinhaber: SICK AG, 79183 Waldkirch (DE)
(72) Erfinder: Hörsch, Ingolf, 79102 Freiburg (DE); Merettig, Gerhard, 79350 Sexau (DE); Lang, Felix, 79418 Schliengen (DE)
(74) Vertreter: Hehl, Ulrich

(56) Entgegenhaltungen:
- EP-A1- 1 873 555
- WO-A1-2009/143797
- DE-A1- 3 223 272
- DE-A1-102008 016 766
- DE-A1-102008 022 941
- US-A1- 2009 057 699

## Beschreibung

Die Erfindung betrifft einen optoelektronischen Sensor mit mehreren, eine Linienanordnung bildenden Halbleiteremittern nach dem Oberbegriff von Anspruch 1 sowie ein Herstellungsverfahren für einen entsprechenden Sensor nach dem Oberbegriff von Anspruch 9.

Optoelektronische Sensoren werden sehr häufig zur Anwesenheitsfeststellung von Objekten in einem Überwachungsbereich eingesetzt. Eine Familie innerhalb der optoelektronischen Sensoren stellen die Lichttaster dar. Sie zeichnen sich dadurch aus, dass der Lichtstrahl tastend in den Überwachungsbereich geführt und nur dann in einem Lichtempfänger registriert wird, wenn sich ein Objekt im Überwachungsbereich befindet, an dem der Lichtstrahl zurückgeworfen wird. Anders arbeitet beispielsweise eine Lichtschranke, wo umgekehrt der ständig direkt oder über einen Reflektor auf einen Lichtempfänger gerichtete Lichtstrahl für eine Detektion von einem Objekt unterbrochen wird.

Es gibt auch innerhalb der Lichttaster unterschiedliche Ausführungen. Ein energetischer Taster bewertet für eine binäre Objektfeststellung die Intensität des Empfängersignals anhand einer Schaltschwelle. Bei einem Triangulationstaster stehen die optischen Achsen von Lichtsender und Lichtempfänger schräg zueinander und mit Hilfe eines ortsauflösenden Lichtempfängers kann der Winkel gemessen werden, unter dem ein Objekt erfasst wird. Dadurch wird eine Entfernungsbestimmung ermöglicht. Hintergrundausblendende Lichttaster bilden eine Art Hybrid. Wie in einem energetischen Lichttaster wird lediglich ein binäres Objektfeststellungssignal erzeugt und kein Entfernungswert gemessen. Zugleich wird aber der Aufbau eines Triangulationstasters ausgenutzt, um mit einem zumindest in einen Nah- und einen Fernbereich ortsauflösenden Lichtempfänger zwei Empfangssignale zu erzeugen. Deren Differenz wird mit einer Schaltschwelle bewertet, um so die Objekterfassung auf einen bestimmten Entfernungsbereich zu beschränken und Empfangssignale von Objekten außerhalb dieses Entfernungsbereichs als Hintergrundsignal auszublenden. Ein hintergrundausblendender Lichttaster ist beispielsweise in der DE 197 21 105 C2 offenbart, wobei hier Schalter vorgesehen sind, um die einzelnen Elemente eines ortsauflösenden Lichtempfängers auf veränderliche Weise dem Nah- oder Fernbereich zuzuordnen.

Bei Lichttastern tritt eine sogenannte Schwarz-Weiß-Verschiebung auf. Darunter versteht man eine scheinbare Entfernungsänderung aufgrund der Remissionseigenschaften von Objekten. Ein schwach remittierendes Objekt erzeugt in einer anderen Entfernung ein über- beziehungsweise unterschwelliges Empfangssignal als ein stark remittierendes oder gar spiegelndes beziehungsweise glänzendes Objekt. Solange man die Remissionseigenschaften der zu detektierenden Objekte nicht vorab kennt, führt dies also zu einer Messungenauigkeit. Bei hintergrundausblendenden Lichttastern entsteht eine Differenz des Schaltabstands.

Als Lichtsender werden in einem Lichttaster häufig Halbleiterelemente, also Laserdioden oder LEDs verwendet. Dafür sind diverse Herstellungsprozesse bekannt, etwa COB- (Chip On Board) oder SMD-Technologie (Surface Mounted Device). Diese Lichtquellen werfen über eine Abbildungsoptik einen quadratischen oder kreisförmigen Lichtfleck auf das zu detektierende Objekt. Da die optisch emittierte Leistung über die Quanteneffizienz des Materials zum injizierten Strom direkt proportional ist, wird die maximale optische Ausgangsleistung von dem Produkt aus Emissionsfläche und maximal zulässiger Stromdichte bestimmt, die als Materialparameter festliegt. Dies bedeutet, dass durch Vergrößerung der Kantenlänge oder des Durchmessers der Sendefläche zwar eine höhere Gesamtempfängerleistung, nicht aber eine höhere Leistungsdichte auf dem Empfänger erzielt werden kann.

Es ist weiterhin bekannt, der Lichtquelle optische Elemente nachzuordnen, etwa Streufolien oder Zylinderlinsen, welche aus einem zunächst weitgehend punktförmigen Strahlquerschnitt in der Projektion auf den Empfänger eine Linie erzeugen. Dieser Ansatz ist beispielsweise in der DE 10 2007 050 096 A1 gewählt. Die zu einer Linie strahlformenden optischen Elemente sind in die Kollimatorlinse oder die Frontscheibe des Sensors integriert. Dabei wird aber nur die identische Lichtleistung umverteilt.

Die WO2009/115202 A2 beschreibt einen optischen Sensor, der ein Nahelement und ein Fernelement zum Nachweis von Lichtflecken auf einem Objekt beziehungsweise einer Hintergrundfläche aufweist. Die Lichtsendeeinheit weist eine Mehrzahl von Lichtquellen auf, um auf dem nachzuweisenden Objekt an unterschiedlichen Orten Lichtflecken zu erzeugen. Die Lichtsender haben untereinander unterschiedliche physikalische Eigenschaften, beispielsweise unterschiedliche Wellenlängen, Modulationen oder einen gegenseitigen Zeitversatz der Aktivierung. Damit sollen Variationen der Messprinzipien eingeführt werden, um Objekte robuster zu detektieren. Die optische Ausgangsleistung für ein einziges Messprinzip wird deshalb nicht erhöht. Außerdem vergrößern sich durch den Einsatz mehrerer nebeneinander angeordneter Lichtquellen der erforderliche Bauraum und die Herstellungskosten.

Aus der WO 2009/143797 A1 ist ein Halbleiterbauelement für eine Lichtschranke bekannt, welches ein monolithisches Gehäuseunterteil mit zwei Kavitäten aufweist. In den Kavitäten wird ein Emitter beziehungsweise ein Detektor angeordnet, und wegen des monolithischen Gehäuseaufbaus wird ein optisches Übersprechen verhindert. Das Dokument erwähnt die Möglichkeit, mehrere Emitter sowie mehrere Detektoren in einem Halbleiterbauelement unterzubringen.

Die EP 2 226 940 A2 befasst sich mit einem Lichtgitter, dessen Sendeelemente zyklisch nacheinander mit konstantem Zeitverhalten aktiviert werden. Für ein solches Lichtgitter wird eine Verbesserung der Lichtempfängerschaltung vorgeschlagen.

Die DE 10 2008 016 766 A1 beschreibt einen optoelektronischen Sensor und ein Verfahren zur Detektion von Objekten. Dabei sind mindestens zwei Lichtquellen vorgesehen, die Licht in untereinander unterschiedlichen Spektralbändern abstrahlen. Durch Bildauswertungen unter spektral unterschiedlichen Beleuchtungsbedingungen soll die Zuverlässigkeit der Erkennung von Objektmerkmalen erhöht werden.

Die US2009/0057699 A1 befasst sich mit der Herstellung von LEDs, die in ein Material mit einem Zusatz inerter weißer Partikel gekapselt sind, bei denen es sich nicht um Phosphor handeln soll. Beispielsweise wird Titanoxid zugesetzt. Dadurch soll eine grün-gelbe Färbung der LED im Umgebungslicht vermieden werden. In einer Ausführungsform werden drei solche LEDs nebeneinander auf einem Träger angeordnet und als Blitzlicht einer Kamera eingesetzt.

Deshalb ist Aufgabe der Erfindung, die Erkennungssicherheit und Reichweite eines gattungsgemäßen optoelektronischen Sensors zu verbessern.

Diese Aufgabe wird durch einen optoelektronischen Sensor gemäß Anspruch 1 und ein Herstellungsverfahren gemäß Anspruch 9 gelöst. Die Lösung geht von dem Grundgedanken aus, in einem Sensor, der nach einem tastenden Detektionsprinzip arbeitet, eine Linienanordnung mehrerer Einzellichtquellen zu verwenden. Anders als im Stand der Technik sollen diese Einzellichtquellen aber nicht unterschiedliche physikalische Eigenschaften zur Verfügung stellen. Stattdessen wird durch simultane, synchrone Aktivierung untereinander identischer Sendeelemente nicht nur die Ausgangsleistung, sondern auch die optische Leistungsdichte auf dem Empfänger erhöht. Denn die lineare Kette von n Lichtflecken ähnelt zwar einer Linie, die Gesamtenergie kann jedoch bis zu n-mal höher sein als die eines einzelnen Lichtflecks. Zugleich sollen die Einzellichtquellen in einem einheitlichen, kostengünstigen Prozess auf kleinstem Bauraum entstehen, indem sie auf einem gemeinsamen Halbleiterkristall ausgebildet sind. Der Sensor ist als hintergrundausblendender Lichttaster ausgebildet, wobei der Lichtempfänger mindestens ein Nahbereichselement und ein Fernbereichselement mit einem Trennsteg dazwischen aufweist, und wobei die Linienanordnung parallel zum Trennsteg ausgerichtet ist.

Die Erfindung hat den Vorteil, dass sich die Reichweite des Sensors erhöht. Die störenden Auswirkungen der Schwarz-Weiß-Verschiebung werden reduziert. Die Robustheit der Objekterkennung wird verbessert, denn Objekte, die seitlich entgegen der Vorzugsrichtung in den Sensor einfahren oder spiegelnde beziehungsweise stark glänzende Objekte führen seltener zu einem Fehlschalten. Weiterhin kann ein linienförmiger Lichtfleck projiziert werden, ohne dass kostentreibende nachgeordnete optische Elemente, wie Streufolien oder Zylinderlinsen, benötigt werden. Die thermische Bau-teilbelastung sinkt, weil gegenüber einem Einzelelement bei gleicher Stromdichte eine höhere nutzbare Ausgangsleistung erzeugt wird.

Die Einzelemitter weisen untereinander die gleiche Leistungsdichte und das gleiche Spektrum auf. Letztlich sollen dabei die Einzelemitter effektiv einen gemeinsamen Lichtfleck höherer Leistungsdichte bilden. Die genannten beiden Größen sind dabei besonders wichtig.

Die Treiberschaltung ist bevorzugt dafür ausgebildet, einzelne oder mehrere der Einzelemitter abzuschalten. Dies ermöglicht eine adaptive Anpassung des Lichtflecks an die Detektionssituation. Durch Abschaltung von maximal n-1 Einzelemittern kann die emittierte Gesamtleistung variiert werden, beispielsweise für eine Dynamikanpassung. Auch kann die Gestalt beziehungsweise geometrische Ausdehnung des Lichtflecks angepasst werden, insbesondere für einen gewählten Detektionsabstand. So entsteht ein präziser Lichtfleck, der im Bedarfsfall auch eine geringere Leistung hat.

Die Einzelemitter sind bevorzugt untereinander identisch strukturiert und sind insbesondere mit gleicher Kristallgröße, also flächengleich, mit gleicher Geometrie und/oder mit gleicher Sendeöffnung ausgebildet. Dies ermöglicht ebenfalls, einen gemeinsamen Lichtfleck mit vorhersagbaren, gleichmäßigen Eigenschaften zu erzeugen. Die Eigenschaften des Lichtflecks variieren hier nur minimal über die Längsausdehnung. Sind die Einzelemitter einzeln abschaltbar, so können untereinander gänzlich identische Emitter in unterschiedlicher Weise vereinzelt, also selektiv aktiviert werden und es sind dabei keine individuellen Unterschiede zu beachten, sondern nur, welcher Anteil einer maximal möglichen Linie ausgeleuchtet werden soll.

Alternativ sind die Einzelemitter untereinander unterschiedlich strukturiert und weisen insbesondere unterschiedliche Kristallflächen und/oder Geometrien auf. Dies ermöglicht bei selektiver Abschaltung von Einzelemittern mehr Anpassungsmöglichkeiten für die Gestaltung des Lichtflecks. Dabei wird die emittierte Sendeleistung und damit die emittierte Leistungsdichte beziehungsweise die Form des auf dem zu erfassenden Objekt erzeugten Lichtflecks variabel bestimmt. Beispielsweise ist durch entsprechendes An- und Abschalten von Einzelemittern der Wechsel zwischen einem kreis- und einem linienförmigen Lichtfleck denkbar.

Die Einzelemitter weisen bevorzugt eine rechteckige, insbesondere quadratische Abstrahlfläche auf. Damit wird die Kristallfläche optimal genutzt und so je Waferfläche eine maximale optische Ausgangsleistung erzielt. Alternativ ist aber auch eine kreisförmige Emissionsfläche ("Pointsource") möglich.

Die Einzelemitter weisen bevorzugt keine Kontaktierung in der Sendeöffnung auf. Es handelt sich also um Seitenkontakt-Chips. Dadurch werden störende Bondkontakte und abschattende Bonddrähte in der Abbildung verhindert.

Der Sensor ist als hintergrundausblendender Lichttaster ausgebildet, wobei der Lichtempfänger mindestens ein Nahbereichselement und ein Fernbereichselement mit einem Trennsteg dazwischen aufweist, und wobei die Linienanordnung parallel zu dem Trennsteg ausgerichtet ist. Das Funktionsprinzip eines hintergrundausblendenden Lichttasters wurde einleitend kurz erläutert. Von der Lage des Trennstegs hängt ab, welche Signale als Hintergrund ausgeblendet werden. Deshalb sollte für eine präzise Detektion mit einer Entfernungsänderung des Objekts ein möglichst großer Lichtmengenanteil über den Trennsteg verschoben werden. Das wird durch diese Anordnung sichergestellt.

Vorteilhafterweise ist die Länge der Linienanordnung durch Abstand und Anzahl der Einzelemitter so angepasst, dass die Beleuchtungslinie in einem vorgegebenen Detektionsabstand über die gesamte Breite des Lichtempfängers reicht, ohne den Lichtempfänger zu überstrahlen, wobei der Detektionsabstand insbesondere dem Fernbereich oder dem Trennsteg entspricht. Durch diese Anpassung der Länge der Beleuchtungslinie, also dem Wert n mal Pitch der Einzelemitter, an die Breite des Lichtempfängers wird die verfügbare Ausgangsleistung optimal eingesetzt. Der Lichtempfänger wird vollständig ausgenutzt und zugleich gerade noch nicht überstrahlt. Soweit sich dies wegen Divergenz der Sendelichtstrahlen nicht sicherstellen lässt, sollte die genannte Bedingung zumindest für einen gewissen Entfernungsbereich erfüllt sein, etwa den Fernbereich oder den Trennsteg, an dem eine präzise Messung besonders wichtig ist. Außerdem sollte, wenn die optimalen Bedingungen nicht erreichbar sind, bevorzugt die Beleuchtungslinie besser etwas kürzer ausgebildet werden als etwas länger. Dann wird zwar nicht die gesamte Empfängerfläche ausgenutzt, aber es geht dafür kein Sendelicht verloren.

Bei dem erfindungsgemäßen Herstellungsverfahren werden die LED-Einzelemitter eines Lichtsenders in einem gemeinsamen Batch-Prozess hergestellt. Anschließend kann der gemeinsamen Halbleiterkristall in einer gewünschten angepassten Weise zersägt werden, um eine benötigte Linienanordnung von LED-Einzelemittern zu erhalten. Dadurch sind in einem einfachen und kostengünstigen Herstellungsprozess besonders kompakte Lichtsenderanordnungen möglich, bei dem der Abstand der LED-Einzelemitter untereinander (Pitch) minimal ist. Die geometrische Gestalt und Ausrichtung der Einzelemitter zueinander unterliegt einem hochpräzisen Maskenprozess. Außerdem ist sichergestellt, dass die LED-Einzelemitter des Lichtsenders in ihren elektrischen, mechanischen, thermischen und optischen Charakteristika als Nachbarelemente auf demselben Wafer untereinander nahezu gleich sind. Der Lichtsender wird dann beispielsweise in einem Sensor gemäß einer der oben beschriebenen Ausprägungen eingesetzt.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Schnittdarstellung eines herkömmlichen Lichttasters nach dem Triangulationsprinzip;
- Fig. 2a: ein herkömmlicher Lichtsender für den Sensor gemäß Figur 1 mit einem einzigen Einzelemitter;
- Fig. 2b: eine Darstellung eines Lichtflecks auf dem Lichtempfänger eines Sensors gemäß Figur 1 bei Dehnung mit Hilfe einer nachgeordneten Optik;
- Fig. 3: eine Darstellung des Differenzsignals zwischen Nah- und Fernempfangs-element in einem hintergrundausblendenden Triangulationstaster zur Er-läuterung der Abhängigkeit der Schaltgenauigkeit von der optischen Leis-tungsdichte;
- Fig. 4a-b: eine Darstellung der Energieverteilung in Abhängigkeit von der Position auf einem Lichtempfänger bei einem ausgedehnten und bei einem schmalen Lichtfleck;
- Fig. 5a-d: verschiedene Ausführungsformen der Strukturierung eines Halbleiterkris-talls mit den Emitterflächen der Einzelemitter eines Lichtsenders in einem erfindungsgemäßen Sensor; und
- Fig. 6: eine Darstellung ähnlich Fig. 2b bei Einsatz eines erfindungsgemäßen Lichtsenders gemäß Figur 5a.

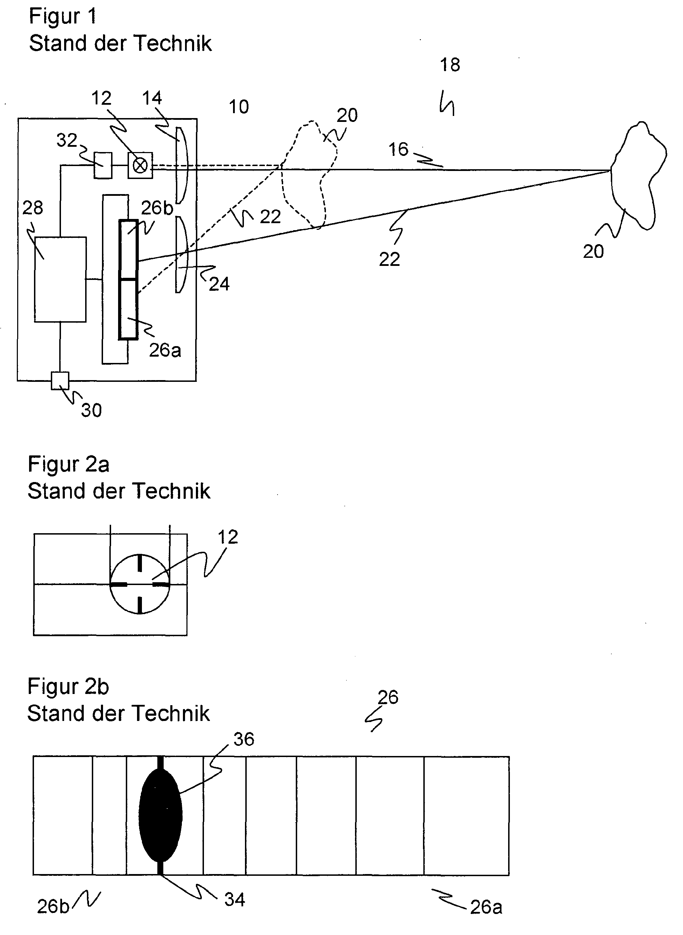

Figur 1 zeigt eine schematische Schnittdarstellung eines Sensors 10 in einer Ausführung als herkömmlicher Triangulations-Lichttaster 10 mit Hintergrundausblendung. Die weiter unten erläuterte Erfindung betrifft eine Verbesserung eines solchen Sensors 10, aber auch anderer an sich bekannter optoelektronischer Sensortypen wie eines energetischen oder entfernungsmessenden Triangulationstasters, einer Lichtschranke oder anderer.

Ein Lichtsender 12 sendet über einer strahlformenden Sendeoptik 14 einen Lichtstrahl 16 in einen Überwachungsbereich 18 aus. Fällt der Lichtstrahl 16 auf ein Objekt 20, so gelangt ein Teil des Sendelichts als remittierter oder reflektierter Sendelichtstrahl 22 zurück zu dem Sensor 10. Eine Empfangsoptik 24 fängt diesen remittierten Sendelichtstrahl 22 auf und leitet ihn auf einen Lichtempfänger 26, wo das einfallende Licht in ein elektrisches Empfangssignal umgewandelt wird. Eine Auswertungseinheit 28 ist mit dem Lichtempfänger 26 verbunden, um aus den elektrischen Empfangssignalen je nach Anwesenheit eines Objekts 20 ein Objektfeststellungssignal zu bestimmen, das an einem Schaltausgang 30 ausgegeben wird. Die Auswertungseinheit 28 ist außerdem mit einer Sendesteuerung 32 verbunden, die das Aussenden des Sendelichtstrahls 16 von dem Lichtsender 12 steuert.

Der dargestellte Sensor verfügt über eine Hintergrundausblendung. Der Lichtempfänger 26 ist in ein Nahbereichelement 26a und ein Fernbereichselement 26b unterteilt. Aufgrund des Versatzes zwischen Lichtsender 12 mit Sendeoptik 14 gegenüber dem Lichtempfänger 26 mit Empfangsoptik 24 und wegen der Anordnung der beiden Empfangselemente 26a-b längs der Querverbindung zwischen Lichtsender 12 und Lichtempfänger 26 fällt der remittierte Lichtstrahl 22 eines mit gestrichelten Linien dargestellten nahen Objekts 20 auf das Nahbereichselement 26a und der remittierte Lichtstrahl 22 eines mit durchgezogenen Linien dargestellten fernen Objekts 20 auf das Fernbereichselement 26b. Die Auswertungseinheit 28 bildet zur Hintergrundausblendung die Differenz zwischen dem Signal des Nahbereichselements 26a und des Fernbereichselements 26b und bewertet diese Differenz mit einer Schwelle.

Der herkömmliche Lichtsender 12 des Sensors 10 ist in Figur 2a gezeigt. Dieser Lichtsender 12 besteht aus einem einzelnen LED-Emitter auf einem Halbleitersubstrat. Figur 2b zeigt den herkömmlichen Lichtempfänger 26. Wie erkennbar, kann anstelle eines nur zweielementigen Lichtempfängers 26 eine Empfängerzeile eingesetzt werden. Die Pixel der Empfängerzeile haben vorzugsweise eine unterschiedliche Breite, um die nichtlineare Abhängigkeit der Verschiebung des Lichtflecks auf dem Lichtempfänger 26 von dem Abstand des Objekts 20 zumindest teilweise auszugleichen. Für die Hintergrundausblendung wird per Werkseinstellung, Parametrierung oder Einlernen mindestens ein Trennsteg 34 definiert, der die Pixel in mindestens zwei Gruppen und damit den Lichtempfänger 26 in das Nah- und das Fernbereichselement 26a-b unterteilt. Die Lage des Trennstegs 34 kann veränderbar sein.

Für energetische Lichttaster könnte die optische Leistung auf dem Lichtempfänger 26, die für die Reichweite maßgebend ist, durch Vergrößerung der Kantenlänge oder des Durchmessers der Sendefläche des Einzelemitters gemäß Figur 2a verbessert werden. Da im Stand der Technik nur ein Einzelemitter als Lichtquelle des Lichtsenders 12 verwendet wird, entsteht aber stets ein zusammenhängender Lichtfleck 36 auf dem Lichtempfänger 26. Durch die Sendeoptik 14 kann zwar die Form des Lichtflecks 36 verändert werden, um ihn zu einer Ellipse oder zigarrenförmig aufzuziehen. Dadurch wird beispielsweise die Detektion inhomogen remittierender Objekte 20 erleichtert, und zugleich behält der Lichtfleck 36 seine Breitenausdehnung, die für die Genauigkeit der Ortsauflösung und damit Triangulation entscheidend ist. Die verfügbare optische Leistung wird dabei aber nur umverteilt. Die Leistungsdichte im Lichtfleck 36 sinkt deshalb sogar noch ab.

Für einen hintergrundausblendenden Lichttaster spielt aber die Leistungsdichte auf dem Lichtempfänger 26 die entscheidende Rolle. Die Leistungsdichte im Lichtfleck 36 bestimmt über die Rückwärtsabbildung durch die Empfangsoptik diejenige Energiemenge, die bei einer Tastweitenänderung, also einer Entfernungsänderung des Objekts 20, über die Triangulation des Sensors 10 über den Trennsteg 34 verschoben wird. Davon wiederum hängen Reichweite und Schaltpunktgenauigkeit des Sensors 10 ab.

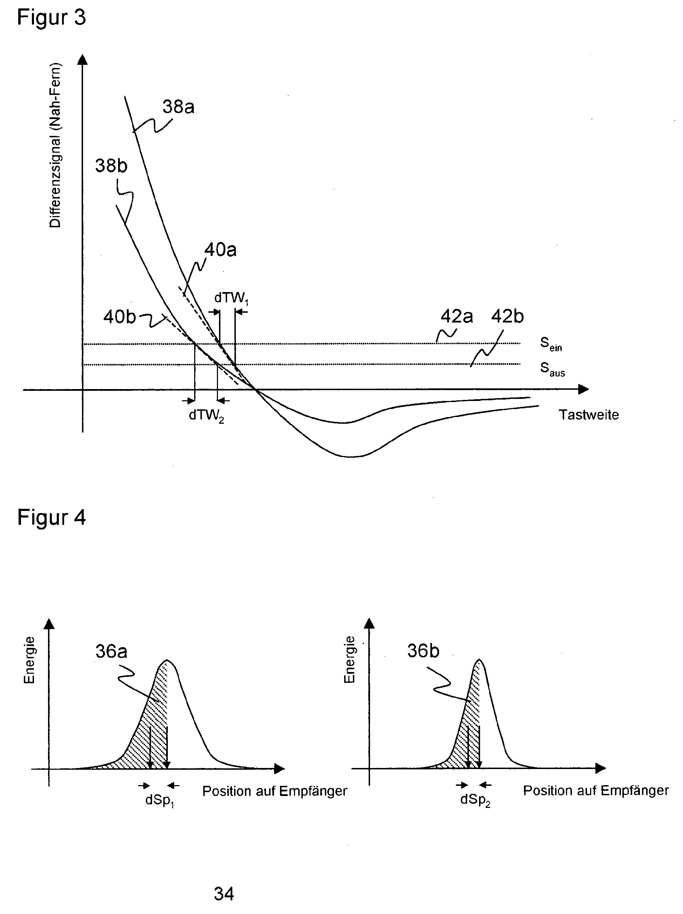

Dies soll anhand der Figur 3 näher erläutert werden. Dargestellt sind dort Differenzsignale Eₙₐₕ-E_{fern} der gemessenen Energien in dem Nahbereichselement 26a und dem Fernbereichselement 26b, und zwar ein Differenzsignal 38a für eine höhere und ein Differenzsignal 38b für eine geringere Leistungsdichte. Beispielhafte unterschiedliche Steigungen in den kritischen Bereichen sind durch gestrichelte Linien 40a-b verdeutlicht. Die beiden gepunkteten Linien 42a-b kennzeichnen zwei Schaltschwellen Sₑᵢₙ, Sₐᵤₛ für das Einschalten und Ausschalten des Sensors 10 am Schaltausgang 30. Zwei Schaltschwellen, die eine Schalthysterese erzeugen, werden üblicherweise verwendet, um ein rasches Hin- und Herschalten aufgrund von Messschwankungen am Schaltpunkt zu vermeiden. Diese Schalthysterese schlägt sich in einem Tastweitenintervall dTW₁, dTW₂ nieder, das zu einem Toleranzbereich für den Schaltabstand des Sensors 10 führt. Wie in Figur 3 gut erkennbar, wird dieses Tastweitenintervall und damit die Schalthysterese für größere Steigungen geringer. Der Schaltpunkt eines hintergrundausblendenden Lichttasters wird also mit größerer Leistungsdichte präziser definiert.

Figur 4 illustriert einen weiteren unerwünschten Effekt des "Einfahrens entgegen der Vorzugsrichtung" bei herkömmlichen hintergrundausblendenden Lichttastern. Dieser Effekt bewirkt, dass derartige Sensoren 10 bei Einfahren von Objekten 20 quer zum Sensor 10 und längs der Verbindungsachse von Lichtsender 12 zu Lichtempfänger 26 zu Fehlschalten neigen, da der Lichtfleck 36 von dem einfahrenden Objekt 20 zunächst nur zum Teil getroffen beziehungsweise angeschnitten wird. Dieser zunächst empfangene Anteil des Lichtflecks 36 verschiebt den Schwerpunkt des Empfangssignals fälschlicherweise zu stark in den Nah- beziehungsweise Fernbereich. Zur Minimierung dieses Effekts ist ein Lichtfleck 36b vorteilhaft, der bei gleicher oder höherer Gesamtenergie oder Leistungsdichte linienförmig beziehungsweise rechteckig oder zigarrenförmig mit kurzer Achse in Triangulationsrichtung ausgelegt ist. Dann wird bei teilweisem Anschneiden des Lichtflecks 36 der Schwerpunkt in Triangulationsrichtung nur möglichst wenig verschoben.

Figur 4a zeigt die Energieverteilung eines ausgedehnten Lichtflecks 36a in Abhängigkeit von der Position auf dem Lichtempfänger 26, Figur 4b die entsprechende Darstellung eines schmalen Lichtflecks 36b. Der schraffierte Anteil entspricht der Energie, die bei Anschneiden um beispielsweise 50 % empfangen wird. Die Verschiebung dSp₁, dSp₂ ist für einen schmalen Lichtfleck 36b deutlich geringer als für einen breiten Lichtfleck 36a. Damit ist bei einem Einfahren entgegen der Vorzugsrichtung die Änderung des Schaltpunkts, an dem der hintergrundausblendende Lichttaster ein- und ausschaltet, für einen Sensor 10 mit schmalem Lichtfleck 36b geringer als mit breitem Lichtfleck 36a.

Erfindungsgemäß ist deshalb vorgesehen, als Lichtsender 12 eine Linienanordnung mehrerer Einzelemitter 12a-d einzusetzen. Diese Einzelemitter 12a-d sind auf demselben Halbleitersubstrat (44) oder Wafer und vorzugsweise im selben Batch-Prozess hergestellt. Dadurch sind sie in allen ihren wesentlichen Eigenschaften untereinander nahezu identisch. Absichtliche Abweichungen hinsichtlich der Strukturierung zu Anpassung der erzeugten Lichtflecken sind denkbar.

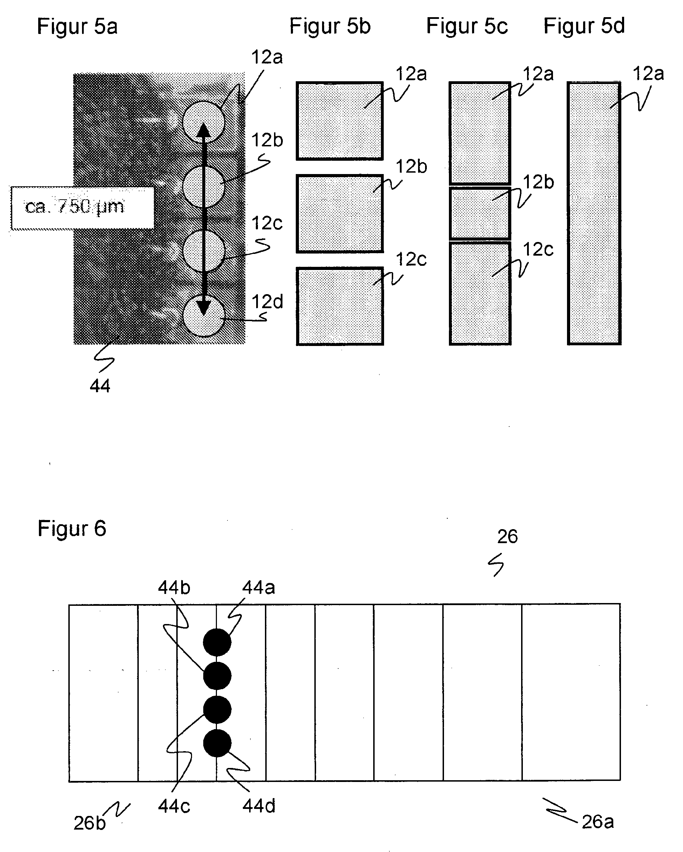

Der Lichtsender 12 gemäß Figur 5a weist vier in einer Reihe angeordnete Einzelemitter 12a-d mit kreisförmiger Abstrahlfläche auf. Dementsprechend werden, wie in Figur 6 illustriert, vier kreisförmige Lichtflecken 46a-d auf dem Lichtempfänger 26 erzeugt, die eine Linie bilden. Diese Linie ist vorzugsweise durch entsprechende Anordnung des Lichtsenders 12 parallel zum Trennsteg 34 orientiert. Die transversale Lage auf dem Lichtempfänger 26 hängt von der Tastweite ab, so dass die Linie nur dann wie in Figur 6 mit dem Trennsteg 34 zusammenfällt, wenn sich ein Objekt 20 gerade im kritischen Abstand zwischen Nah- und Fernbereich befindet. Zugleich ist die Länge der Linie gerade so gewählt, dass sie den Lichtempfänger 26 ausfüllt, ohne ihn zu überstrahlen.

Durch die mehreren Einzelemitter 12a-d wird eine wesentlich höhere Energiedichte auf dem Lichtempfänger 26 erzielt, so dass die im Zusammenhang mit den Figuren 3 und 4 erläuterten Vorteile verwirklicht werden können. Selbstverständlich kann die Anzahl der Einzelemitter 12a-d, deren Abstrahlfläche und Abstand zueinander variiert werden. Die Figuren 5b-d zeigen einige aus der Vielzahl denkbarer Varianten. Dabei kann es vorteilhaft sein, rechteckige Abstrahlflächen zu wählen, um den Halbleiterkristall des Lichtsenders 12 und die Fläche auf dem Lichtempfänger 26 optimal auszunutzen. Außerdem hat zwar die identische Ausprägung aller Einzelemitter 12a-d gemäß Figur 5a den Vorteil der Einfachheit. Durch unterschiedliche Strukturierung, wie beispielhaft in den Figuren 5b-c gezeigt, lässt sich aber die Form des resultierenden Lichtflecks 46a-d noch weiter anpassen.

Die Sendesteuerung 32 steuert das Sendeverhalten der Einzelemitter 12a-d. Häufig werden alle Einzelemitter 12a-d synchron aktiviert, um die höchstmögliche Leistung und Leistungsdichte zu erzielen. Denkbar ist aber auch, gezielt einige der Einzelemitter 12a-d zu deaktivieren, um den Lichtfleck 46a-d an einen Lichtempfänger, eine Detektionsaufgabe oder einen Schaltabstand anzupassen.

## Patentansprüche

1. Optoelektronischer Sensor (10) mit einem Lichtsender (12) zum Aussenden von Sendelicht (16) in einen Überwachungsbereich (18) und mit einem Lichtempfänger (26) zum Empfangen des an Objekten (20) in dem Überwachungsbereich (18) reflektierten oder remittierten Sendelichts (22), wobei der Lichtsender (12) mehrere Laser-Einzelemitter (12a-d) oder LED-Einzelemitter (12a-d) aufweist, die auf demselben Halbleiterkristall (44) ausgebildet sind, und die Einzelemitter (12a-d) eine Linienanordnung bilden,
**dadurch gekennzeichnet,**
**dass** der Sensor (10) als hintergrundausblendender Lichttaster ausgebildet ist, wobei der Lichtempfänger (26) mindestens ein Nahbereichselement (26a) und ein Fernbereichselement (26b) mit einem Trennsteg (34) dazwischen aufweist, dass eine gemeinsame Treiberschaltung (32) vorgesehen ist, mit der die Einzelemitter (12a-d) synchron aktivierbar sind und dass die Linienanordnung parallel zu dem Trennsteg (34) ausgerichtet ist.

2. Sensor (10) nach Anspruch 1,
wobei die Einzelemitter (12a-d) untereinander die gleiche Leistungsdichte und das gleiche Spektrum aufweisen.

3. Sensor (10) nach Anspruch 1 oder 2,
wobei die Treiberschaltung (32) dafür ausgebildet ist, einzelne oder mehrere der Einzelemitter (12a-d) abzuschalten.

4. Sensor (10) nach einem der vorhergehenden Ansprüche,
wobei die Einzelemitter (12a-d) untereinander identisch strukturiert sind, insbesondere flächengleich, mit gleicher Geometrie und/oder mit gleicher Sendeöffnung ausgebildet sind.

5. Sensor (10) nach einem der Ansprüche 1 bis 3,
wobei die Einzelemitter (12a-d) untereinander unterschiedlich strukturiert sind, insbesondere unterschiedliche Kristallflächen und/oder Geometrien aufweisen.

6. Sensor (10) nach einem der vorhergehenden Ansprüche,
wobei die Einzelemitter (12a-d) eine rechteckige, insbesondere quadratische Abstrahlfläche aufweisen.

7. Sensor (10) nach einem der vorhergehenden Ansprüche,
wobei die Einzelemitter (12a-d) keine Kontaktierung in der Sendeöffnung aufweisen.

8. Sensor (10) nach einem der vorhergehenden Ansprüche,
wobei die Länge der Linienanordnung durch Abstand und Anzahl der Einzelemitter (12a-d) so angepasst ist, dass die Beleuchtungslinie (46a-d) in einem vorgegebenen Detektionsabstand über die gesamte Breite des Lichtempfängers (26) reicht, ohne den Lichtempfänger (26) zu überstrahlen, wobei der Detektionsabstand insbesondere dem Fernbereich oder dem Trennsteg (34) entspricht.

9. Verfahren zur Herstellung eines optoelektronischer Sensors (10), insbesondere eines Sensors nach einem der vorhergehenden Ansprüche, mit einem Lichtsender (12) zum Aussenden von Sendelicht (16) in einen Überwachungsbereich (18) und mit einem Lichtempfänger (26) zum Empfangen des an Objekten (20) in dem Überwachungsbereich (18) reflektierten oder remittierten Sendelichts, wobei zur Herstellung des Lichtsenders (12) mehrere LED-Einzelemitter in einer Linienanordnung (12a-d) auf einem Halbleiterkristall (44) erzeugt werden,
**dadurch gekennzeichnet,**
**dass** der Sensor (10) als hintergrundausblendender Lichttaster hergestellt wird, dessen Lichtempfänger (26) mindestens ein Nahbereichselement (26a) und ein Fernbereichselement (26b) mit einem Trennsteg (34) dazwischen aufweist, dass eine Vielzahl von LED-Einzelemittern (12a-d) in einem gemeinsamen Batchprozess auf demselben Halbleiterkristall (44) erzeugt und anschließend die gewünschte Linienanordnung aus dem Halbleiterkristall (44) ausgesägt wird, dass die LED-Einzelemitter (12a-d) zur synchronen Aktivierung an eine gemeinsame Treiberschaltung (32) angeschlossen werden und dass die Linienanordnung parallel zu dem Trennsteg (34) ausgerichtet wird.

## Claims

1. An optoelectronic sensor (10) having a light transmitter (12) for transmitting transmission light (16) into a monitoring area (18) and having a light receiver (26) for receiving the transmission light (22) reflected or remitted from objects (20) in the monitoring area (18), wherein the light transmitter (12) comprises a plurality of individual laser emitters (12a-d) or individual LED emitters (12a-d) formed on a same semiconductor crystal (44), the individual emitters (12a-d) forming a line arrangement,
**characterized in that** the sensor (10) is configured as a background suppressing light sensor, wherein the light receiver (26) comprises at least one near field element (26a) and a far field element (26b) with a separating strip (34) in between, **in that** a common driving circuit (32) for synchronously activating the individual emitters (12a-d) is provided, and **in that** the line arrangement is oriented in parallel with the separating strip (34).

2. The sensor (10) according to claim 1,
wherein the individual emitters (12a-d) have a same power density and a same spectrum among one another.

3. The sensor (10) according to claim 1 or 2,
wherein the driving circuit (32) is configured to switch off one or several of the individual emitters (12a-d).

4. The sensor (10) according to one of the preceding claims,
wherein the individual emitters (12a-d) are identically structured among one another, in particular are formed with a same area, a same geometry and/or a same emission aperture.

5. The sensor (10) according to one of claims 1 to 3,
wherein the individual emitters (12a-d) are differently structured among one another, in particular comprise different crystal areas and/or geometries.

6. The sensor (10) according to one of the preceding claims,
wherein the individual emitters (12a-d) comprise a rectangular, in particular a quadratic emission surface.

7. The sensor (10) according to one of the preceding claims,
wherein the individual emitters (12a-d) do not comprise a contacting in the emission aperture.

8. The sensor (10) according to one of the preceding claims,
wherein the length of the linear arrangement is adapted, by distance and number of the individual emitters (12a-d), so that, in a predetermined detection distance, the illumination line (46a-d) covers the entire width of the light receiver (26) without irradiating beyond the light receiver (26), wherein the detection distance in particular corresponds to the far field or the separating strip (34).

9. A method for manufacturing an optoelectronic sensor (10), in particular a sensor according to one of the preceding claims, having a light transmitter (12) for transmitting transmission light (16) into a monitoring area (18) and having a light receiver (26) for receiving the transmission light reflected or remitted from objects (20) in the monitoring area (18), wherein for the manufacturing of the light transmitter (12) a plurality of individual LED emitters (12a-d) in a line arrangement are produced on a semiconductor crystal (44),
**characterized in that** the sensor (10) is made as a background suppressing light sensor whose light receiver (26) comprises at least one near field element (26a) and a far field element (26b) with a separating strip (34) in between, **in that** a plurality of individual LED emitters (12a-d) is produced in a common batch process on the same semiconductor crystal (44) and subsequently the desired linear arrangement is sawed from the semiconductor crystal (44), **in that** the individual LED emitters (12a-d) are connected to a common driving circuit (32) for synchronous activation, and **in that** the linear arrangement is oriented in parallel with the separating strip (34).

## Revendications

1. Capteur optoélectronique (10) comprenant un émetteur de lumière (12) pour émettre une lumière émise (16) dans une zone de surveillance (18) et comprenant un récepteur de lumière (26) pour recevoir la lumière émise (22) réfléchie ou réémise sur des objets (20) dans la zone de surveillance (18), dans lequel l'émetteur de lumière (12) comprend plusieurs émetteurs individuels à laser (12a-d) ou plusieurs émetteurs individuels à DEL (12a-d), qui sont réalisés sur le même cristal semi-conducteur (44), et les émetteurs individuels (12a-d) forment un agencement en ligne,
**caractérisé en ce que**
le capteur (10) est réalisé sous forme d'un détecteur de lumière avec masquage d'arrière-plan, dans lequel le récepteur de lumière (26) comprend au moins un élément de zone proche (26a) et un élément de zone lointaine (26b) avec une barrette de séparation (34), **en ce qu'**il est prévu un circuit pilote commun (32) au moyen duquel les émetteurs individuels (12a-d) peuvent être activés de manière synchrone, et **en ce que** l'agencement en ligne est orienté parallèlement à la barrette de séparation (34).

2. Capteur (10) selon la revendication 1,
dans lequel les émetteurs individuels (12a-d) présentent les uns par rapport aux autres la même densité de puissance et le même spectre.

3. Capteur (10) selon la revendication 1 ou 2,
dans lequel le circuit pilote (32) et réalisé pour couper des émetteurs individuels isolément ou à plusieurs (12a-d).

4. Capteur (10) selon l'une des revendications précédentes,
dans lequel les émetteurs individuels (12a-d) sont structurés de façon identique les uns par rapport aux autres, et sont réalisés en particulier avec la même surface, avec la même géométrie et/ou avec la même ouverture d'émission.

5. Capteur (10) selon l'une des revendications 1 à 3,
dans lequel les émetteurs individuels (12a-d) sont structurés de façon différente les uns par rapport aux autres, et présentent en particulier des surfaces cristallines et/ou des géométries différentes.

6. Capteur (10) selon l'une des revendications précédentes,
dans lequel les émetteurs individuels (12a-d) présentent une surface de rayonnement rectangulaire, en particulier carrée.

7. Capteur (10) selon l'une des revendications précédentes,
dans lequel les émetteurs individuels (12a-d) ne présentent aucun moyen de mise en contact dans l'ouverture d'émission.

8. Capteur (10) selon l'une des revendications précédentes,
dans lequel la longueur de l'agencement en ligne est ajustée au moyen de la distance et du nombre des émetteurs individuels (12a-d) de telle façon que la ligne d'éclairage (46a-d) s'étend, à une distance de détection prédéterminée, sur la largeur totale du récepteur de lumière (26) sans éblouir le récepteur de lumière (26), et la distance de détection correspond en particulier à la zone lointaine ou à la barrette de séparation (34).

9. Procédé pour la fabrication d'un capteur optoélectronique (10), en particulier d'un capteur selon l'une des revendications précédentes, comprenant un émetteur de lumière (12) pour émettre de la lumière émise (16) dans une zone de surveillance (18) et comprenant un récepteur de lumière (26) pour recevoir la lumière émise réfléchie ou réémise sur les objets (20) dans la zone de surveillance (18), procédé dans lequel pour la fabrication de l'émetteur de lumière (12) on engendre plusieurs émetteurs individuels à DEL dans un agencement en ligne (12a-d) sur un cristal semi-conducteur (44),
**caractérisé en ce que**
le capteur (10) est réalisé sous forme de détecteur de lumière à masquage d'arrière-plan, dont le récepteur de lumière (26) comprend au moins un élément de zone proche (26a) et un élément de zone lointaine (26b) avec une barrette de séparation (34) entre celles-ci, **en ce qu'**une pluralité d'émetteurs individuels à DEL (12a-d) sont engendrés dans un processus discontinu commun sur le même cristal semi-conducteur (44) et l'agencement en ligne souhaité est ensuite découpé à la scie à partir du cristal semi-conducteur (44), **en ce que** les émetteurs individuels à DEL (12a-d) sont raccordés, pour une activation synchrone, à un circuit pilote commun (32), et **en ce que** l'agencement en ligne est orienté parallèlement à la barrette de séparation (34).
